(19) Europäisches Patentamt

European Patent Office

Office européen des brevets

(11) **EP 0 635 317 B1**

(12) **EUROPÄISCHE PATENTSCHRIFT**

(45) Veröffentlichungstag und Bekanntmachung des Hinweises auf die Patenterteilung:
**13.05.1998 Patentblatt 1998/20**

(51) Int. Cl.$^6$: **B08B 3/02**, B29C 71/02, B29C 71/00

(21) Anmeldenummer: **94102464.8**

(22) Anmeldetag: **18.02.1994**

(54) **Vorrichtung zum Reinigen und/oder zur Wärmebehandlung von Werkstücken, insbesondere von Profilbändern**

Apparatus for washing and/or heat-treating workpieces, in particular profile strips

Appareil de nettoyage et/ou de traitement thermique de pièces, en particulier de bandes profilées

(84) Benannte Vertragsstaaten:
**DE ES FR GB IT**

(30) Priorität: **24.07.1993 DE 4324924**

(43) Veröffentlichungstag der Anmeldung:
**25.01.1995 Patentblatt 1995/04**

(73) Patentinhaber:
**Durferrit GmbH Thermotechnik**
**D-68169 Mannheim (DE)**

(72) Erfinder:
**de Chamisso, Jean-Baptiste**
**F-73800 Coise (FR)**

(74) Vertreter: **Weber, Wolfgang**
**Degussa AG**
**Fachbereich Patente**
**Postfach 1345**
**63403 Hanau (DE)**

(56) Entgegenhaltungen:
EP-A- 0 142 082          EP-A- 0 523 022
WO-A-87/07534          FR-A- 2 596 295
US-A- 4 076 175          US-A- 4 788 992
US-A- 5 118 357

• PATENT ABSTRACTS OF JAPAN vol. 17, no. 457 (P-1597) 20. August 1993 & JP-A-05 107 199 (TOYODA GOSEI CO LTD) 27. April 1993

## Beschreibung

Die Erfindung betrifft eine Vorrichtung zum Reinigen von Werkstücken, insbesondere von Profilbändern aus einem elastischen Werkstoff, vorzugsweise zum Abdichten von Fahrzeugtüren und -fenstern, mit mehreren in einer Linie angeordneten Behältern zur Aufnahme von Behandlungsflüssigkeit und mit einer Einrichtung zur Führung und für den Transport des Profilbandes entlang der in den einzelnen Behältern enthaltenen Behandlungsflüssigkeitsbädern, mit Pumpen für die Förderung von Behandlungsflüssigkeit zu Düsenanordnungen mit Hilfe derer die Behandlungsflüssigkeit auf das Profilband sprühbar ist und mit Düsenanordnungen im Bereich der die Behälter verbindenden Durchtrittskanäle oder Gleitrinnen, über die von Gebläsen geförderte Luftströme zur Trocknung und zur Flüssigkeitstrennung auf das Profilband blasbar sind.

Der Einsatz von Behandlungskaskaden mit umgekehrter Strömungsrichtung wird schon seit langer Zeit in der Galvanoplastik betrieben und zwar mit dem Ziel, das Volumen giftiger Emissionen zu verringern. Ein Wasserstrom durchfließt dazu in umgekehrter Richtung eine gewisse Anzahl Spülbehälter, in die die zu reinigenden Teile eingetaucht werden.

Seit einigen Jahren ist man bemüht, diese Waschkaskaden in Salzbad-Wärmbehandlungslinien einzubauen. Die Salze werden dabei im Spülwasser ausgetragen und die Salzlake in einem geeigneten Verdunster verdampft.

Die Wirksamkeit einer Behandlungskaskade wird daran gemessen, inwieweit der Wasserverbrauch reduziert wird und man dabei eine einwandfreie Reinigung beibehält. Bei richtiger Bemessung ergeben sich dafür folgende Verhältnisse:

$$Qt = qt \sqrt[n]{Rd}$$

Dabei ist

Qt = verbrauchte Wassermenge (ohne Verdunstung)

qt = Wassermenge, die von der Charge oder von dem gereinigten Produkt ausgetragen wird, wenn dieses von einem Behälter in den nächsten befördert wird.

n = Anzahl der Behälter

Rd = Verdünnungsverhältnis.

Obwohl man bereits versucht hat, sogenannte Behandlungskaskaden in umgekehrter Richtung bei der Salzbadvulkanisierung einzusetzen, war es kaum möglich, nach dieser Gesetzmäßigkeit vorzugehen; wenigstens nicht unter Bedingungen, nach denen der Wasserverbrauch 100 mal geringer wurde, oder besser noch, bei denen eine zu ≥ 300 g/l konzentrierte Salzlake erzielt werden konnte.

Es ist aus der US-A 5,118,357 bekannt, Bänder mit einer Flüssigkeit zu behandeln, anschließend über Luftdüsen von der anhaftenden Flüssigkeit zu befreien und diese in einem Behälter zu sammeln und wiederzuverwenden. Hierbei hat man allerdings nur eine einzige Behandlungsstation

Aus der US-A 4,076,175 sind rohrförmige Düsenanordnungen zum Besprühen von Rohroberflächen mit Farbe bekannt, die aus mehreren Rohrstücken bestehen.

Auch aus der WO 87/07534 sind Vorrichtungen zum Schmieren von Zugkabeln bekannt, die mit Sprühvorrichtungen versehen sind.

Aus der US-A 4,788,992 ist eine Vorrichtung bekannt, mit der durchlaufende Kunststoffbänder in einem Reinigungsbad mit Ultraschall behandelt werden. Anhaftende Badreste werden in einer zweiten Anlage mit Luftdüsen abgetrennt, die Bänder anschließend mit reinem Wasser gesäubert und das anhaftende Wasser mittels Luftdüsen entfernt. Das gesammelte Wasser wird aus dem Behälter über entsprechende Leitungen abgeleitet und kann wiedergewonnen werden. Auch hier verwendet man keine Behandlungskaskaden

Diese Aufgabe der vorliegenden Erfindung ist es, eine vergleichbar bessere Lösung für eine Behandlungskaskade gemäß Oberbegriff von Anspruch 1 zu schaffen, die sowohl mit weit weniger Frischwasser auskommt, als auch eine wirtschaftliche Rückgewinnung der eingesetzten Salze ermöglicht.

Darüberhinaus soll ein Profilband auch bei komplexer Geometrie des Bandes einwandfrei waschbar sein; das Profilband soll auf einer gleichmäßigen Temperatur gehalten werden können (bei der es z.B. ausvulkanisierbar ist) und eine einwandfreie Trocknung des Profilbandes soll nach der Reinigung in der Kaskade ermöglicht werden, so daß anschließend ein Verkleben oder Verkitten z.B. mit Karosserieteilen durchführbar ist.

Fette und Gummipartikel sollen ebenso abfilterbar sein, wie ein Teil der Karbonate aus dem Salzbad, die vom Profilband vom einen Bad in das nächste Bad verschleppt werden.

Weiterhin soll eine komplette Dichtigkeit der Gesamtanlage erreicht werden, trotz hoher Drücke und Durchflußmengen von Wasser und Luft. Schließlich sollen Eingriffe während des Betriebs in jedem Abteil möglich sein und zwar unabhängig von anderen Behältern.

Erfindungsgemäß wird diese Aufgabe dadurch gelöst, daß die Düsenanordnungen längs einer geraden Linie auf Halteplatten fest angeordnet sind, die jeweils oberhalb des Badspiegels im Innern jedes Behälters ortsfest gehalten sind, wobei jedes Rohrstück mit mehreren Düsen versehen ist, aus denen die Behandlungsflüssigkeit austritt und wobei die Stahlrichtung dieser Düsen so ausgerichtet ist, daß das entlang der Rotationsachse dieser Rohrstücke bewegte Profilband unmittelbar allseits von Flüssigkeitsstrahlen getroffen wird, und daß die Düsenanordnungen jeweils um eine vertikale Achse schwenkbar und zusätzlich um die Rotationsachse verschiebbar auf den Halteplatten gehalten sind.

Weitere Einzelheiten und Merkmale sind in den Patentansprüchen näher beschrieben und gekennzeichnet.

Die Erfindung läßt die verschiedensten Ausführungsmöglichkeiten zu; eine davon ist in den anhängigen Zeichnungen rein schematisch näher dargestellt und zwar zeigen:

Fig. 1 die Reinigungsvorrichtung mit insgesamt vier Behältern in perspektivischer Ansicht,

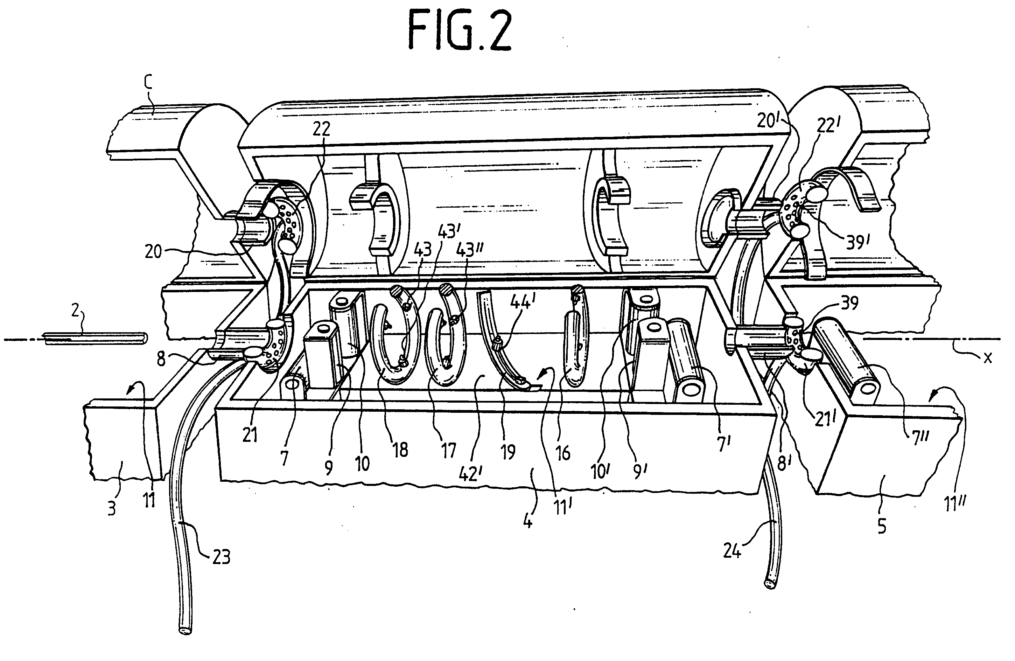

Fig. 2 eine perspektivische Teilansicht der Transporteinrichtung der Behandlungseinrichtung und der Trockeneinrichtung in vergrößertem Maßstab,

Fig. 3 eine perspektivische Darstellung der Düsenanordnung einer Einrichtung zum Waschen des Prifilbandes gemäß Fig. 2 und

Fig. 4 eine perspektivische Teilansicht der Düsenanordnung der Trocknungseinrichtung, ebenfalls in vergrößerter Darstellung.

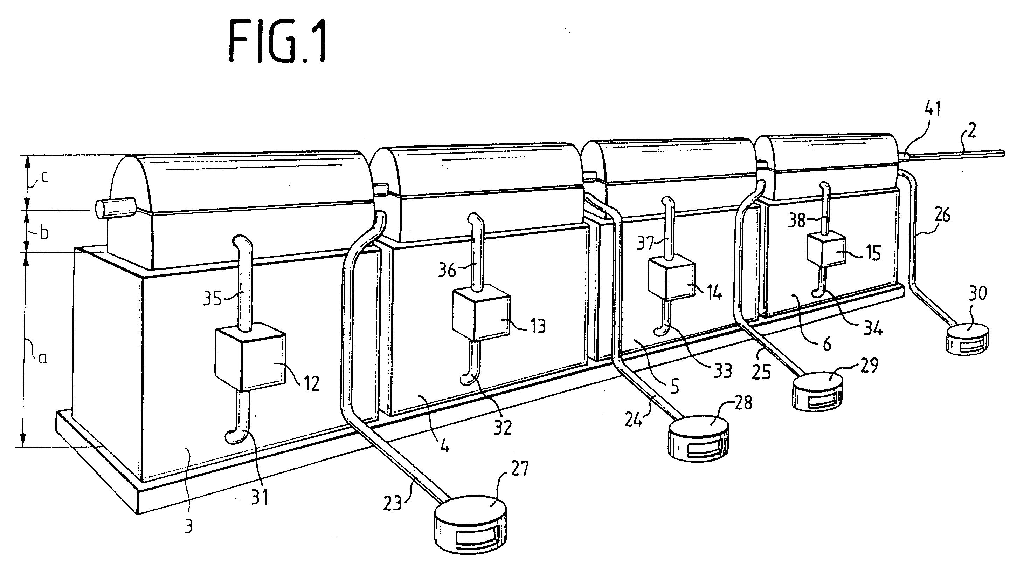

Wie Fig. 1 zeigt, sind insgesamt vier Behälter 3 bis 6 in einer Linie nebeneinander angeordnet, wobei jeder Behälter mit einem unteren Teil a versehen ist, der die Behandlungsflüssigkeit aufnimmt, mit einem oberen Teil b in der sich die Düsenanordnung zum Waschen des Profilbandes und die Einrichtung für den Transport befindet und einem aufklappbaren Deckel c, der verhindert, daß zerstäubte Behandlungsflüssigkeit in den die Anlage umgebenden Raum geschleudert wird und dafür Sorge trägt, daß die Behandlungsflüssigkeit in das im Teil a befindliche Behandlungsflüssigkeitsbad zurückgeleitet wird. Die nebeneinander angeordneten Behälter 3 bis 6 sind jeweils über einen aus Gleitrinnen 8, 8',.... bzw. 20, 20', ... gebildeten Kanal für den Transport des Profilbandes 2 untereinander verbunden, wobei jeweils im Bereich dieser Kanäle Düsenanordnungen 21, 22 bzw. 21', 22',... vorgesehen sind, die über Schlauchleitungen 23 bis 26 mit Gebläsen 27 bis 30 in Verbindung stehen. Die in jedem Behälter 3 bis 6 im jeweils unteren Teil a vorhandene Flüssigkeit wird jeweils für jeden Behälter getrennt von einer Flüssigkeitspumpe 12 bis 15 über jeweils ein Saugrohr 31 bis 34 in ein Druckrohr 35 bis 38 gepreßt und gelangt über die Druckrohre jeweils in die Düsenanordnungen 16 bis 19 bzw. 16' bis 19'bzw. .... .

Die Düsenanordnungen tragen nun dafür Sorge, daß die Flüssigkeit das Profilband allseitig umspült, wobei der hohe Druck, unter dem die Flüssigkeit steht, bewirkt, daß die Außenflächen des Profilbandes 2 vollständig und in allen Partien von der Flüssigkeit bespült werden, wobei das Profilband 2 teilweise aufgefaltet oder aufgeblättert wird und die Flüssigkeit auch in die Nuten und Rillen des Profilbandes 2 eindringt. Die vom Profilband 2 abtropfende Flüssigkeit sickert bzw. läuft in den Flüssigkeitssumpf bzw. das Flüssigkeitsbad in den unteren Teil a zurück und wird dann erneut von der entsprechenden Pumpe 12 bis 15 in die Düsenanordnung 16 bis 19 bzw. 16' bis 19', .... gefördert. Um zu verhindern, daß Flüssigkeit von dem ersten Behälter 3 in den daneben angeordneten zweiten Behälter 4, bzw. von diesem in den Behälter 5 usw. verschleppt wird, befinden sich zwischen dem Behälter 3 und 4, bzw. 4 und 5, bzw. 5 und 6 jeweils eine Düsenanordnung 21, 22 bzw. 21',22', usw., die Luft unter hohem Druck auf das Profilband 2 jeweils im Bereich der Kanäle 8, 20 bzw. 8', 20' usw. bläst, wobei die einzelnen Luftaustrittsdüsen 39,39',... bzw. 45,45',...jeweils so ausgerichtet sind, daß die am Profilband 2 haftende Flüssigkeit jeweils in den Behälter 3 bis 6 zurückgedrückt wird, mit dessen Flüssigkeit das Profilband 2 gerade zuvor gespült worden war, so daß auf diese Weise ein Verschleppen von Flüssigkeit vom einen Behälter in den nächsten Behälter nahezu ausgeschlossen wird.

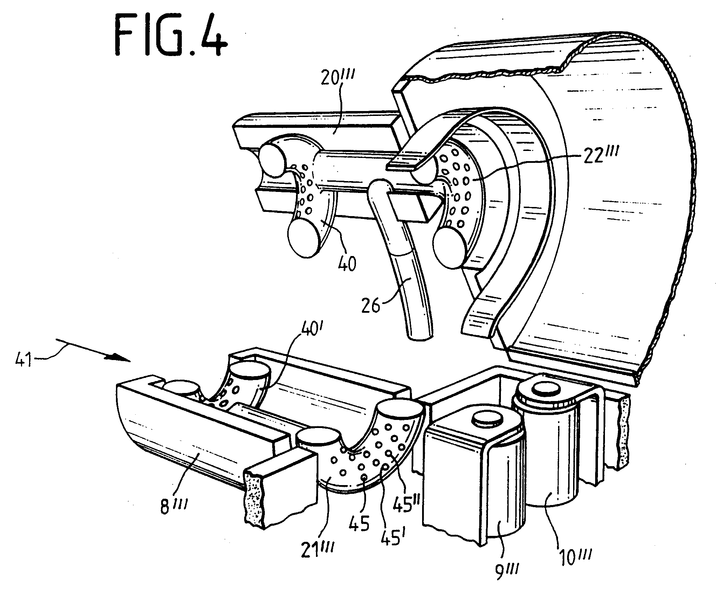

Die in Fig. 4 dargestellte Düsenanordnung 21''', 22''' bzw. 40, 40' befindet sich am Ende der Kette von Behältern 3 bis 6, d.h. an der Austrittsöffnung 41 für das fertig vulkanisierte, gereinigte und getrocknete Profilband 2 und trägt einerseits dafür Sorge, daß eine möglichst geringe Menge von Flüssigkeit den Behälter 6 nach außenzu verlassen kann und andererseits, daß das Profilband 2 praktisch vollständig trocken und versandfertig bzw. verarbeitungsfertig die Vorrichtung verläßt.

Im Falle eines im heißen Salzbad vulkanisierten (ca. 250°C) Profilbandes 2, mit komplexer Geometrie,für Automobile, vor allem mit Lippen, die zur Halterung des Profilbandes an der Karosserie dienen, trifft man etwa folgende Bedingungen an:

- Durchlaufgeschwindigkeit des Profilbandes:
15 bis 20 m/min
- Masse des Profilgummis pro Meter:
= bis 400 g
- Unterschiedliche Salzeinschleppung:
bis 70 kg/8 h

Entsprechend diesen Daten müssen etwa 12.500 Kalorien/sec ausgeschieden werden, d.h ungefähr 52 kW unter folgenden Bedingungen:

- konzentrierter Wasserstrom in Richtung eines zusätzlich vorgesehenen Verdunsters $\leq$ 30 l/h bei Gummiprofil-Temperatur $\leq$ 60°C (der Verdunster ist in den Zeichnungen nicht näher dargestellt).

Es ergibt sich die Beziehung: $Qt = qt^h Rd$
Zur Erfüllung dieser Beziehung sind folgende Bedingungen einzuhalten:

a) eine Vielzahl von Behältern 3 bis 6

b) das durchgelaufene Profilband 2 muß an der Oberfläche dieselbe Salzkonzentration aufweisen, wie das Bad, welches das Profilband zuvor verlassen hat.

c) der Faktor qt, oder die mitgeschleppte Wassermenge muß so klein wie möglich sein.

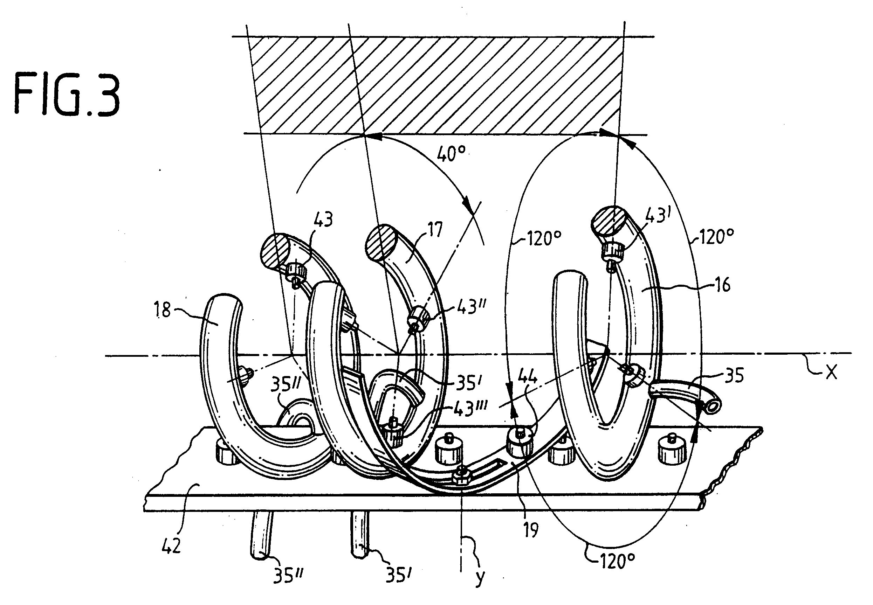

In Hinsicht auf b) wird das gewünschte Ergebnis erreicht, indem man das Profilband unter isostatischem Druck duscht. Dazu ist jeder Behälter 3 bis 6 jeweils mit 9 Düsen 43, 43',...auf 3 Spritzrampen 16,17,18 bzw. 16',17',18' usw. ausgerüstet, die jeweils unter 120° zueinander angeordnet sind, (siehe Fig. 3). Alle 9 Düsen der jeweils 3 Rampen sind untereinander jeweils um 40° versetzt, damit ein Winkel von 360°C abgedeckt wird.

Eine zehnte einstellbare Düsenanordnung 19,19',... mit Düse 44,44',...ist ebenfalls vorhanden; sie hat einen orientierbaren horizontalen Bündelstrahl für die Lippen des Gummiprofils und ist um die Achse y schwenkbar auf der Halteplatte 42,42',... montiert.

Die Düsen arbeiten bei einem regulierbaren Durchfluß von 12 bis 20 m³/h und unter einem regulierbaren Druck von 3 bis 5 bar.

Die besondere Position der gesamten Düsen 43,43',...44 und Rampen 16,17,18 bzw. 16',17',18' usw., die gegeneinander versetzt in den Behältern 3 bis 6 angebracht sind erlaubt es, die Wirbelströmung gleichmäßig zu verstärken.

Der Durchlauf des Profilbandes 2 durch alle Wirbelströmungen hat dieselbe Wirkung wie ein verlängertes Bad und man erzielt somit die vorstehend erwähnten Bedingungen.

Der Faktor qt wird dadurch erreicht, daß ein zweiteiliges Rundumgebläse 21,21',...bzw. 22,22',... am Ausgang jedes Behälters installiert ist. Die Wirkung der Gebläse 27 bis 30 wird durch 4 leistungsfähige Druckverstärker erreicht, dabei sind die Durchmesser der Düsen 39,39',... bzw. 45,45',... so bemessen, daß der Luftstrahl am Ausgang eine Geschwindigkeit von ≥ 150 m/sec aufweist.

Die Gebläse 27 bis 30 sind jeweils so ausgelegt, daß sich dadurch der Faktor qt bedeutend verringert und folglich die Ausschleppung vom einen Behälter 3 bis 6 zum nächsten. Das gilt vor allem für die 3 ersten Behälter; im 4. und letzten Behälter 6 dient dann das Gebläse 30 hauptsächlich zum Trocknen des Profilbandes 2 über die Rundumdüsenanordnung 40,40', ... bzw. 21''',22'''.

Der Einsatz eines stärkeren Gebläseverstärkers und die Regulierung der Luftverdichtung ermöglichen es, daß sich eine Ausgangstemperatur an den Gebläsedüsen von 60°C einstellt.

Die Wärmeabfuhr (mehr als 50 kw für die beschriebene Ausführungsform) wird hauptsächlich durch das Gebläse mit seiner starken Versprühung bewirkt. Die Versprühung findet bei niedriger Temperatur statt; das Risiko einer Salzabscheidung besteht also nicht (ca. 20 bis 30 l/h d.h. etwa 20 kW). Ein Teil der Kalorien wird von der umgewälzten Wassermenge und durch die Wärmeverluste der Behälter-Außenwände aufgenommen. Ein anderer Teil der Kalorien wird vom Frischwasser aufgenommen (25 l/h Salzlake zum Verdunster + 25 l/h Verdampfung), was ca. 6 kW bedeutet. Der Rest wird schließlich von Wärmetauschern abgeschieden (nicht näher dargestellt).

**Patentansprüche**

1. Vorrichtung zum Reinigen von Werkstücken, insbesondere von Profilbändern (2) aus elastischem Werkstoff, vorzugsweise zum Abdichten von Fahrzeugtüren und -fenstern, mit mehreren in einer Linie angeordneten Behältern (3 bis 6) zur Aufnahme von Behandlungsflüssigkeit und mit einer Einrichtung zur Führung und für den Transport des Profilbandes (2) entlang der in den einzelnen Behältern (4, 6) enthaltenen Behandlungsflüssigkeisbädern (11,11',...), mit Pumpen (12 bis 15) für die Förderung von Behandlungsflüssigkeit zu Düsenanordnungen (16 bis 19), über die Behandlungsflüssigkeit auf das Profilband (2) sprühbar ist, und mit Düsenanordnungen (21, 21' bzw. 22,22') im Bereich der die Behälter (3 bis 6) miteinander verbindenden Durchtrittskanälen oder Gleitrinnen (8,8',... bzw. 20,20',...), über die von Gebläsen (27 bis 30) geförderte Luftströme zur Trocknung und zur Flüssigkeitstrennung auf das Profilband (2) blasbar sind, wobei jedem Behälter (3 bis 6) jeweils eine Pumpe (12 bis 15) zugeordnet ist, die die Behandlungsflüssigkeit zu der jeweils jedem Behälter (3 bis 6) zugeordneten, von ringförmigen Rohrstückenausgebildeten Düsenanordnung (16 bis 19) bzw. 16'bis 19',...) fördert, und wobei die aus der jeweiligen Düsenanordnung (16 bis 19 bzw. 16'bis 19',...) austretende Behandlungsflüssigkeit in den jeweils zugeordneten Behälter (3 bis 6) zurückströmt,
**dadurch gekennzeichnet,**
daß die Düsenanordnungen (16, 17, 18 bzw. 16', 17', 18'...) längs einer geraden Linie auf Halteplatten (42, 42', ...) fest angeordnet sind, die jeweils oberhalb des Badspiegels (11, 11', ...) im Innern jedes Behälters (3 bis 6) ortsfest gehalten sind, wobei jedes Rohrstück mit mehreren Düsen (43, 43', ...) versehen ist, aus denen die Behandlungsflüssigkeit austritt und wobei die Strahlrichtung dieser Düsen (43, 43', ...) so ausgerichtet ist, daß das entlang der Rotationsachse (X) dieser Rohrstücke bewegte Profilband (2) unmittelbar allseits von den Flüssigkeitsstrahlen getroffen wird, und daß die Düsenanordnung (19, 19',...) jeweils um eine vertikale Achse y schwenkbar und zusätzlich um die Rotationsachse x verschiebbar auf den Halteplatten (42, 42', ...) gehalten sind und jeweils mit mindestens einer Düse (44, 44', ...) versehen sind die an das jeweilige Druckrohr (35 bis 38) angeschlossen ist.

2. Vorrichtung nach Anspruch 1,
**dadurch gekennzeichnet**,
daß die Gebläse (27 bis 30) über Schlauchleitungen (23 bis 26) mit Düsenanordnungen (21, 21', ...) bzw. 22, 22',... bzw. 40, 40', ...) verbunden sind, die jeweils aus einem Paar u-förmig gebogener Rohrstücke gebildet sind, die das durch die Vorrichtung längs der Rotationsachse (x) bewegte Profilband (2) jeweils im Bereich zwischen zwei Behältern (3 bis 6) umschließen, wobei jedes Rohrstück bzw. jede Düsenanordnung (21, 21', ... bzw. 22, 22', ... bzw. 40, 40', ...) mit einer Vielzahl von auf die Rotationsachse x und in Richtung auf den jeweils benachbarten Behälter (3 bis 6) ausgerichteter Düsen 38, 38', ... bzw. 45, 45' ...) versehen ist.

**Claims**

1. Apparatus for cleaning workpieces, in particular moulded strips (2) of elastic material, preferably for sealing vehicle doors and windows, having a plurality of tanks (3 to 6) arranged in a line for receiving treatment liquid and having a device for guiding and conveying the moulded Strip (2) along the treatment liquid baths (11, 11', ...) contained in the individual tanks (4, 6), having pumps (12 to 15) for delivering treatment liquid to nozzle arrangements (16 to 19) for spraying the treatment liquid onto the moulded strip (2), and having nozzle arrangements (21, 21' or 22, 22'), which are disposed in the region of the through-channels or sliding conduits (8, 8', ... or 20, 20', ...) connecting the tanks (3 to 6) to one another and by means of which air streams delivered by blowers (27 to 30) may be blown for drying and liquid separation purposes onto the moulded strip (2), wherein
associated with each tank (3 to 6) is a pump (12 to 15) which delivers the treatment liquid to the nozzle arrangement (16 to 19) or 16' to 19', ...), which is associated with each tank (3 to 6) and takes the form of annular tubular pieces, and wherein the treatment liquid exiting from the respective nozzle arrangement (16 to 19 or 16' to 19', ...) flows back into the respectively associated tank (3 to 6),
characterized in
that the nozzle arrangements (16, 17, 18 or 16', 17', 18' ...) are arranged in a straight line and in a fixed manner on retaining plates (42, 42', ...), which are in each case held stationary above the bath level (11, 11', ...) inside each tank (3 to 6), each tubular piece being provided with a plurality of nozzles (43, 43', ...), from which the treatment liquid emerges, and the jet direction of said nozzles (43, 43', ...) being aligned in such a way that the moulded strip (2) moving along the axis of rotation (X) of said tubular pieces is hit directly on all sides by the liquid jets, and that the nozzle arrangements (19, 19', ...) are supported on the retaining plates (42, 42', ...) so as to be in each case capable of swivelling about a vertical axis y and additionally displaceable about the axis of rotation x and are each provided with at least one nozzle (44, 44', ...) which is connected to the respective delivery pipe (35 to 38).

2. Apparatus according to claim 1,
characterized in
that the blowers (27 to 30) are connected by hose pipes (23 to 26) to nozzle arrangements (21, 21', ...) or 22, 22', ... or 40, 40', ...), which are formed in each case by a pair of U-shaped tubular pieces which in each case in the region between two tanks (3 to 6) enclose the moulded strip (2) moving through the apparatus along the axis of rotation (x), each tubular piece and/or each nozzle arrangement (21, 21', ... or 22, 22', ... or 40, 40', ...) being provided with a plurality of nozzles (38, 38', ... or 45, 45', ...) which are orientated towards the axis of rotation x and in the direction of the, in each case, adjacent tank (3 to 6).

**Revendications**

1. Dispositif de nettoyage de pièces, notamment de bandes profilées (2) en matériau élastique, destinées de préférence à assurer l'étanchéité de portes et de fenêtres de véhicules automobiles, dans lequel :

  - plusieurs récipients (3 à 6), montés en série, reçoivent le liquide de traitement,
  - un dispositif de guidage et de transport fait passer la bande profilée (2) au-dessus des bains de traitement (11, 11', ..) contenus dans les récipients (4, 6),
  - des pompes (12 à 15) envoient le liquide de traitement à des systèmes de buses (16 à 19) pulvérisant le liquide de traitement sur la bande profilée (2),
  - des systèmes de buses (21, 21' et 22, 22') sont situés dans la zone des canaux de passage ou des goulottes de glissement (8, 8'..., 20, 20') reliant les récipients et permettent d'envoyer sur la bande profilée (2), pour sécher et séparer le liquide, de l'air sortant des soufflantes (27 à 30),
  - à chaque récipient (3 à 6) est associée une pompe (12 à 15) qui l'alimente en liquide de traitement à travers un système de buses (16 à 19) faites de pièces tubulaires circulaires (16 à 19 et 16' à 19',...),

- le liquide de traitement sortant de chaque système de tuyères (16 à 19, 16' à 19',...) est ramené au récipient associé (3 à 6),
caractérisé en ce que

- les systèmes de buses (16, 17, 18 et 16', 17', 18'...) sont disposés en ligne droite, sur des plaques porteuses (42, 42',...) dont chacune est fixée au-dessus du niveau du bain (11, 11',...), à l'intérieur d'un récipient (3 à 6),

- chaque pièce tubulaire porte plusieurs buses (43, 43'...) d'où sort le liquide de traitement sous forme de jets orientés de manière que la bande profilée (2) se déplaçant le long de l'axe de rotation (x) de ces pièces soit atteint directement de tous côtés par les jets,

- chaque système de buses (19, 19'...) est monté sur la plaque porteuse (42, 42') de manière à pouvoir basculer autour d'un axe vertical y et également coulisser le long de l'axe horizontal x,

- chaque système de buses comporte au moins une buse (44, 44'...) raccordée au tuyau de pression (35 à 38) correspondant.

2. Dispositif selon la revendication 1, caractérisé en ce que
les soufflantes (27 à 30) sont reliées par des tuyaux (23 à 26) aux systèmes de buses (21, 21', ...) (22, 22',...), (40, 40',...) constitués chacun d'une paire de pièces tubulaires centrées en forme d'U qui entourent la bande profilée (2) traversant le dispositif selon l'axe de rotation (x), dans la zone entre l'intervalle séparant deux récipients (3 à 6), chaque pièce tubulaire ou chaque système de buses (21, 21',...22, 22',...40, 40',...) étant équipé d'un certain nombre de buses (38, 38' ou 45, 45') orientées vers l'axe de rotation x et en direction du récipient voisin (3 à 6).

FIG.1

FIG.2

FIG.3

FIG.4